# EUROPÄISCHE PATENTSCHRIFT

(11) **EP 0 498 964 B1**
(45) Veröffentlichungstag und Bekanntmachung des Hinweises auf die Patenterteilung: **27.07.1994**
(21) Anmeldenummer: 91122096.0
(22) Anmeldetag: 23.12.1991
(51) Int. Cl.: B64G 1/50, F28D 7/10

(54) **Verdampfungswärmetauscher**
Evaporative heat exchanger
Echangeur de chaleur à évaporation

(30) Priorität: 14.02.1991 DE 4104432
(43) Veröffentlichungstag der Anmeldung: 19.08.1992
(73) Patentinhaber: Daimler-Benz Aerospace Aktiengesellschaft, 80995 München (DE)
(72) Erfinder: Duong, Linh, W-2803 Weyhe (DE)
(74) Vertreter: Hansmann, Dierk, Dipl.-Ing.

(56) Entgegenhaltungen:
- FR-A- 1 162 651
- FR-A- 1 270 981
- US-A- 3 986 551
- AMERICAN SOCIETY OF MECHANICAL ENGINEERS (A.S.M.E.) . 79-ENAS-14 19. Juli1979, NEW YORK (USA) J.R. NASON ET AL.: 'SHUTTLE ORBITER FLASH EVAPORATOR'

## Beschreibung

Die Erfindung betrifft einen Verdampfungswärmetauscher mit wenigsten einem aktiven Flüssigkeitskühlkreislauf zur Abführung von Wärme in Raumfahrzeugen, bei dem die Kühlflüssigkeit in thermischen Kontakt mit einem zu verdampfenden Medium gebracht wird und der aus einem vorzugsweise zylindrischen Behälter besteht, in dessen Inneres das zu verdampfende Medium eingespritzt wird und dessen Wandung zur Bildung eines Ringspaltes aus einer äußeren und einer inneren Schale besteht, wobei das Kühlmittel den Ringspalt durchströmt und wobei im Ringspalt Mittel zur Verbesserung der Wärmeübertragung in Form von Rippen vorgesehen sind, die sowohl mit der inneren als auch mit der äußeren Schale verbunden sind.

Ein Verdampfungswärmetauscher dieser Art ist aus der Druckschrift "Shuttle Orbiter Flash Evaporator", J.R. Mason, Hamilton Standard, 79-ENAS-14, American Society of Mechanical Engineers (Hrsg.) bekannt geworden. In derartigen Verdampfungswärmetauschern wird eine zu mehreren aktiven Kühlkreisläufen gehörende Kühlflüssigkeit in thermischen Kontakt mit einem zu verdampfenden Medium gebracht, das über eine Einspritzdüse in Form eines aus Flüssigkeitströpfchen bestehenden Strahls in den Innen- oder Prozeßraum des Wärmetauschers gesprüht wird, wobei die Tröpfchen in Kontakt mit den diesen Raum begrenzenden Wänden gelangen und dort unter Aufnahme von Wärme aus der Kühlflüssigkeit verdampfen. Der entstehende Dampf wird über eine Austrittsöffnung eines dem Raumfahrzeugen in die Umgebung abgeblasen.

Beim Einsatz einer solchen Anordnung unter den Bedingungen der Schwerelosigkeit bzw. bei unterschiedlichen Beschleunigungen während der Start- und Landephase besteht grundsätzlich das Problem, das zu verdampfende Medium und die zu kühlende Flüssigkeit des Kühlkreislaufs so miteinander in Kontakt zu bringen, daß eine ausreichend hohe Wärmeübertragung erfolgt. Da das zu verdampfende Medium überdies in der Regel auf Kosten zusätzlicher Nutzlast im Raumfahrzeug mitgeführt wird, soll dieses möglichst vollständig in die Dampfphase überführt werden. Zur Verbesserung der Wärmeübertragung zwischen der Kühlflüssigkeit einerseits und dem zu verdampfenden Medium andererseits sind bei der Anordnung gemäß dem Oberbegriff im Inneren des Ringspaltes, der von zwei koaxial angeordneten Zylinderwänden gebildet wird, in axialer Richtung und damit in Strömungsrichtung der Kühlflüssigkeit verlaufende Längsrippen vorgesehen, die aus zylindrisch gebogenen Blechen mit einem Wellenprofil bestehen und die in der Regel durch Hartlöten mit den Zylinderwänden verbunden sind.

Eine solche Verbindung der Rippen mit den beiden Schalen durch Löten oder Schweißen ist zwar fertigungstechnisch, insbesondere bei modernen Werkstoffen, wie hochfesten Aluminiumlegierungen, vergleichsweise schwierig und aufwendig durchzuführen, sie löst jedoch zugleich ein Problem, das bei derartigen Wärmetauschern ansonsten häufig auftritt. Letzteres resultiert daraus, daß zwischen die beiden, aus Gewichtsgründen möglichst dünn ausgelegten Schalen eines solchen Verdampfungswärmetauschers ein heißes Medium strömt, das zudem unter einem erhöhten Druck stehen kann. Hierdurch entsteht im Ringspalt eine auf die Innenseiten der beiden Behälterwände wirkende Druckbeanspruchung, die zumindest zu elastischen Verformungen dieser Wände führen kann.

Sind nun die beiden Behälterwände nicht, wie bei der genannten Anordnung gemäß dem Stand der Technik, über die mit beiden Schalen verlöteten Rippen starr miteinander verbunden, so kann diese Druckbeanspruchung zu einem Ausbauchen einer der beiden Schalen führen, was neben der erhöhten Materialbeanspruchung zugleich zur Folge haben kann, daß die Strömungsbedingungen im Inneren des Ringspaltes nachteilig beeinflußt werden. Dieses kann insbesondere dann der Fall sein, wenn die Rippen abweichend von der beschriebenen Anordnung nur mit einer der beiden Schalen, beispielsweise der inneren, fest verbunden sind, während sie an der anderen Schale nur lose anliegen. Eine solche Anordnung, bei der die Rippen einstückig an eine der Schalen angeformt sind, bietet fertigungstechnisch erhebliche Vorteile gegenüber einem Verdampfungswärmetauscher, bei dem die Rippen mit den Schalen verlötet werden müssen.

Dies gilt, wie erwähnt, insbesondere für Wärmetauscher, die, wie in der Raumfahrttechnik üblich, aus hochfesten Aluminiumlegierungen hergestellt werden und das Verlöten oder Verschweißen solcher innenliegenden Rippen einen großen Fertigungsaufwand und insbesondere umfangreiche Qualitätskontrollen erfordern würden.

Aufgabe der Erfindung ist es daher, einen Verdampfungswärmetauscher der eingangs genannten Art so auszubilden, daß er einerseits einfach zu fertigen ist und daß andererseits eine Verformung der beiden die Behälterwandung bildenden Schalen aufgrund erhöhten Innendrucks in dem von ihnen gebildeten Ringspalt zuverlässig vermieden wird.

Diese Aufgabe löst die Erfindung mit den im Kennzeichen des Patentspruchs 1 angegebenen Maßnahmen. Weitere vorteilhafte Ausgestaltungen sind durch die Merkmale der Unteransprüche gekennzeichnet. Dadurch, daß die beiden Hälften der geteilt ausgebildeten Rippen kraftschlüssig miteinander verbindbar sind, wird nicht nur die strömungstechnisch wirksame Querschnittsform des von den beiden Schalen gebildeten Ringspaltes auch bei erhöhter interner Druckbeanspruchung exakt beibehalten, sondern es wird zugleich auch insgesamt auf sehr einfache Weise die mechanische Festigkeit der gesamten Anordnung erhöht. Die kraftschlüssige Verbindung der inneren und der äußeren Schale kann dabei fertigungstechnisch sehr einfach dadurch erreicht werden, daß die auf der Außenfläche der inneren Schale angeordneten Rippen mit schwalbenschwanzförmigen Ausnehmungen und die Innenfläche der äußeren Schale mit entsprechend geformten Ansätzen versehen sind, die durch Ineinanderschieben und/oder gegenseitiges Verdrehen der beiden Schalen form- und kraftschlüssig miteinander in Eingriff bringbar sind.

Insgesamt bietet die Erfindung den Vorteil, daß die Wandstärken der beiden Schalen und damit das Gesamtgewicht der Anordnung weitestmöglich reduziert werden kann. Zugleich ist dadurch, daß die Rippen einstückig an eine der beiden Schalen angeformt sind, eine gute Wärmeübertragung aus der Kühlflüssigkeit und damit eine hohe Effektivität der Anordnung gewährleistet.

In den Zeichnungen sind Ausführungsbeispiele der Erfindung schematisch dargestellt. Es zeigen:
- Fig. 1: einen Längsschnitt durch einen Verdampfungswärmetauscher,
- Fig. 2: eine Draufsicht auf die in Fig. 1 gezeigte Anordnung in abgewickelter Darstellung,
- Fig. 3: einen Schnitt gemäß III-III durch die Anordnung nach Fig. 1,
- Fig. 4: einen entsprechenden Schnitt durch eine alternative Anordnung und
- Fig. 5: einen Schnitt durch eine weitere Anordnung.

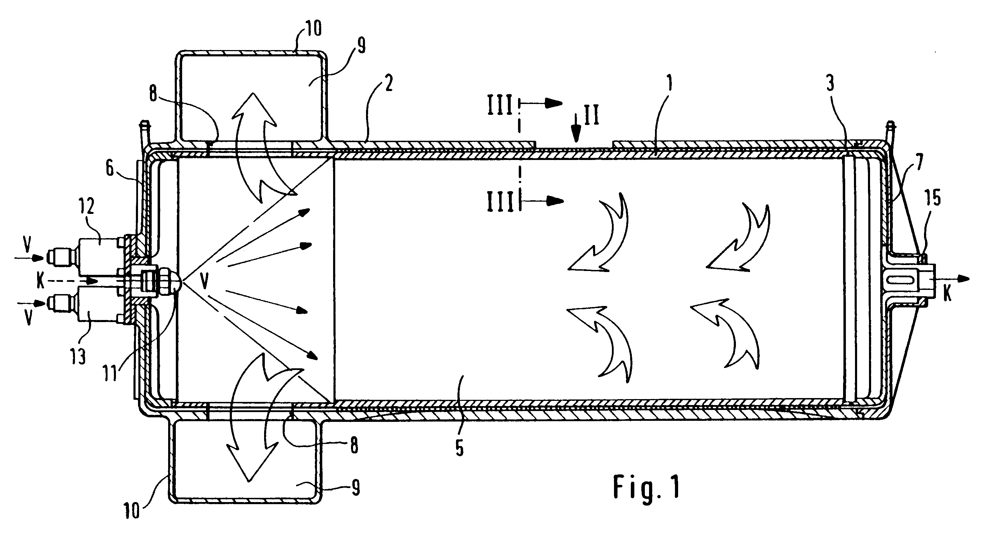

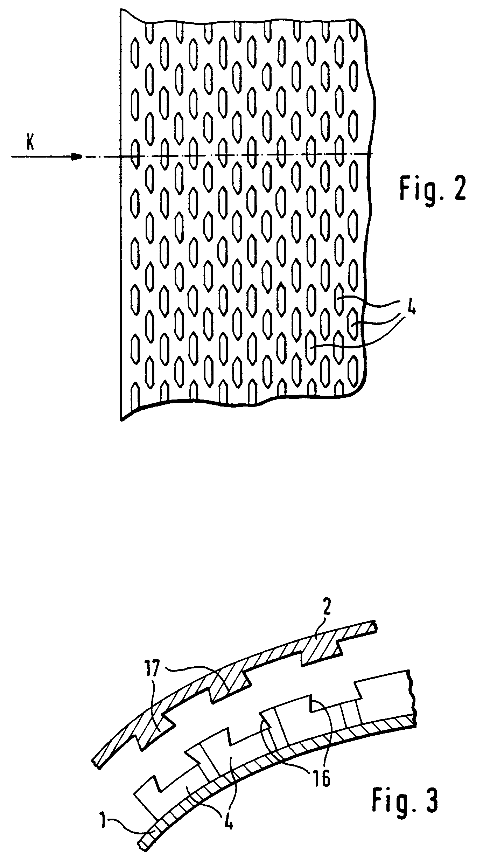

Der in Fig. 1 in Längsrichtung geschnitten dargestellte zylinderförmige Verdampfungswärmetauscher ist zweischalig aufgebaut und besteht aus einem inneren Zylinder 1 sowie einem koaxial zu diesem angeordneten äußeren Zylinder 2. Die Durchmesser der Zylinder 1 und 2 sind so gewählt, daß zwischen beiden ein Ringspalt 3 besteht. Im Ringspalt 3 sind Rippen oder Wirbelkörper 4 angeordnet, die jeweils einstückig an die Außenwand des inneren Zylinders 1 angeformt sind und auf deren Form im Zusammenhang mit den Figuren 2 und 3 noch näher eingegangen wird. Der zylindrische Innen- oder Prozeßraum 5 des Wärmetauschers wird durch eine Kopfplatte 6 bzw. eine Bodenplatte 7 abgeschlossen, die jeweils ebenfalls zweischalig aufgebaut und bajonettartig miteinander verbunden bzw. mit Strömungskanälen versehen sind.

In dem der Kopfplatte benachbarten Bereich des zylindrischen Wärmetauschers sind, über den Umfang verteilt, Auslaßöffnungen 8 vorgesehen, die den Prozeßraum 5 mit einem Ringraum 9 verbinden, der von einem ebenfalls zylindrischen, exzentrisch zu den Zylindern 1 und 2 angeordneten Auspuff 10 gebildet wird.

An der Kopfplatte 5 ist eine Einspritzdüse 11 für das zu verdampfende Medium, im Fall des hier beschriebenen Ausführungsbeispiels der Erfindung Wasser, angeordnet, die in den Prozeßraum 5 ragt und die über eines von aus Redundanzgründen zwei vorhandene Steuerventile 12 und 13 beaufschlagt wird. Der Austrittswinkel der im Pulstrieb arbeitenden Einspritzdüse 11 ist mit etwa 80 Grad so gewählt, daß die Auslaßöffnungen 8 nicht im Sprühbereich liegen. Ferner ist an der Kopfplatte 6 eine Einlaßöffnung für die in einem aktiven Kühlkreislauf zirkulierende Kühlflüssigkeit, im vorliegenden Fall ebenfalls Wasser angeordnet. Diese Einlaßöffnung ist in der Schnittdarstellung der Fig. 1 jedoch nicht enthalten. Am gegenüberliegenden Ende des Prozeßraumes 5 ist in der Bodenplatte 7 eine entsprechende Auslaßöffnung 15 für die Kühlflüssigkeit vorgesehen, der zusätzlich ein in der Zeichnung nicht dargestellter Meßfühler zur Erfassung der Austrittstemperatur der Kühlflüssigkeit zugeordnet ist.

Wie die Darstellung der Figuren 2 und 3 zeigt, weisen die im Ringspalt 3 angeordneten Rippen 4 eine längliche Grundform mit einer sechseckigen Kontur auf. Die Rippen 4 sind, in diesem Fall durch Fräsen, so aus dem inneren Zylinder 1 herausgearbeitet, daß ihre langen Seiten senkrecht zu der in Fig. 2 durch einen mit dem Buchstaben K gekennzeichneten Pfeil angedeuteten Strömungsrichtung der Kühlflüssigkeit verlaufen. Die Rippen 4 umgeben den Zylinder 1 gleichsam in Form unterbrochener Ringe, wobei die zu aufeinanderfolgenden Ringen gehörenden Wirbelkörper, wie in den Figuren 2 und 3 gezeigt, zueinander fluchtend versetzt angeordnet sind. Die Querschnitts-Darstellung in Fig. 3 läßt ferner erkennen, daß die Innenwand des inneren Zylinders 1 eine kappillarförmige Struktur aufweist.

Wie aus der Querschnittsdarstellung in Fig. 3, die die beiden Zylinder 1 und 2 in demontierter Darstellung zeigt, hervorgeht, sind die Rippen 4 in ihrem dem äußeren Zylinder 2 zugewandten äußeren Bereich mit schwalbenschwanzförmigen Ausnehmungen 16 versehen. Auf der Innenfläche des äußeren Zylinders 2 sind in axialer Richtung verlaufende Ansätze oder Stege 17 einstückig angeformt, die ebenfalls eine schwalbenschwanzförmige Außenkontur aufweisen und deren Größe exakt auf die Größe der Ausnehmungen 16 abgestimmt ist.

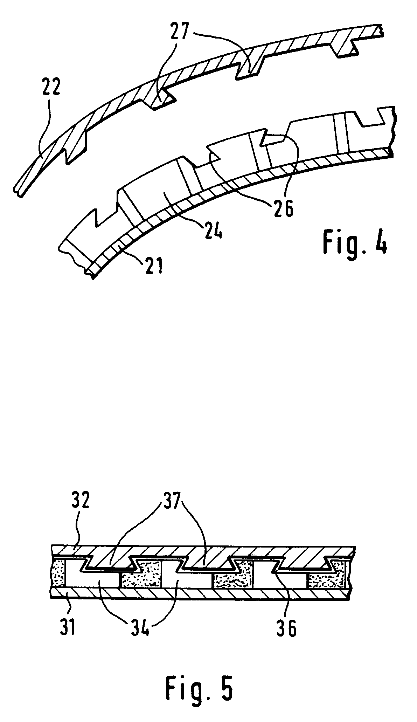

Bei einer in Fig. 4 dargestellten alternativen Ausführungsform des vorstehend beschriebenen Wärmetauschers sind die Ausnehmungen 26 in entsprechenden Rippen 24 an einem inneren Zylinder 21 parallelogrammförmig ausgebildet. Demgemäß weisen in diesem Fall auch die Ansätze 27, die an einem äußeren Zylinder 22 angeformt sind, eine parallelogrammförmige Außenkontur auf.

Schließlich zeigt die Darstellung in Fig. 5 eine weitere Ausführungsform, bei der die Rippen 34 parallel zur Längsachse des inneren Zylinders 31 verlaufen, an den sie wiederum einstückig angeformt sind. Die Rippen 34 sind in diesem Fall wieder mit schwalbenschwanzförmigen Ausnehmungen 36 versehen, in die, wie hier im zusammengebauten Zustand dargestellt, ebenfalls schwalbenschwanzförmige Ansätze 37 des äußeren Zylinders 32 greifen. Das durch den von den beiden Zylindern 31 und 32 gebildeten Ringspalt 33 strömende Kühlmedium ist in dieser Darstellung durch eine Schattierung angedeutet. Die Ansätze verlaufen bei diesem Ausführungsbeispiel in Umfangsrichtung, wobei sie auch nach Art eines unterbrochenen Gewindes schraubenförmig auf der Innenfläche des äußeren Zylinders 32 liegen können.

Zur Montage werden im Fall der in den Figuren 3 und 4 dargestellten Anordnungen der innere und der äußere Zylinder 1 und 2 bzw. 21 und 22 in axialer Richtung übereinander geschoben, im Fall der in Fig. 5 dargestellten Anordnung werden sie dabei gleichzeitig (bei schraubenförmiger Anordnung der Ansätze 36) bzw. anschließend gegeneinander verdreht. In jedem Fall wird auf diese Weise eine kraftschlüssige Verbindung bezüglich einer durch einen erhöhten Innendruck im Ringspalt verursachten Zugbeanspruchung in radialer Richtung zwischen dem inneren und dem äußeren Zylinder hergestellt.

Die Wirkungsweise der vorstehend beschriebenen Anordnungen ist in Fig. 1 anhand von Pfeilen verdeutlicht, die die Strömung der einzelnen Medien, d.h. der Kühlflüssigkeit und des zu verdampfenden Mediums, kennzeichnen sollen.

Die Kühlflüssigkeit, die Bestandteil eines aktiven Kühlkreislaufs ist, durchströmt den Verdampfungswärmetauscher bei der in Fig. 1 dargestellten Anordnung von links nach rechts, d.h. über die Einlaßöffnung gelangt sie in die Kopfplatte 6, von dort in den Ringspalt 3, wo sie an den Rippen 4 vorbei zur Bodenplatte 7 strömt und von dort schließen zur Auslaßöffnung 15. Beim Austritt aus dieser Auslaßöffnung 15 wird ihre Temperatur registriert und es wird, sobald diese einen vorgegebenen Wert übersteigt, die Einspritzeinrichtung für das zu verdampfende Medium aktiviert. Letzteres gelangt dabei aus einem in der Figur nicht dargestellten Vorratsbehälter über die Steuerventile 12 und 13, die intermittierend, d.h. im Pulsbetrieb, beaufschlagt werden, zur Einspritzdüse 11, von wo es in Form feinverteilter Flüssigkeitströpfchen auf die innere Oberfläche des Zylinders 1 auftrifft. Seine Strömungsrichtung ist in der Figur dabei durch die mit "V" gekennzeichneten Pfeile verdeutlicht.

Aufgrund der Abgabe der von der Kühlflüssigkeit eingebrachten Wärme über die Rippen 4 und den inneren Zylinder 1 an dessen wärmeübertragende Innenfläche und des geringen Drucks im Prozeßraum 5, der während der nicht operationellen Zeiten unterhalb von 1 Millibar liegt, geht der auf der Kapillarstruktur befindliche Flüssigkeitsfilm bereits bei relativ niedrigen Temperaturen unverzüglich in die Dampfphase über. Dieser Dampf, dessen Strömungsrichtung in der Figur durch offene Pfeile gekennzeichnet, ist, erhöht den Druck auf etwa 5 bis 10 mbar und strömt anschließend entgegen der Einspritzrichtung zu den Auslaßöffnungen 8, von wo er über den Ringraum 9 und ein in der Figur nicht dargestelltes Schaltventil des Auspuffs 10 in die Umgebung des Raumfahrzeuges abgeführt wird.

Die Pausenzeiten zwischen den einzelnen Pulsen, mit denen das zu verdampfende Medium in den Prozeßraum 5 gelangt, sind so gewählt, daß die Innenfläche des Zylinders 1 sowie der Kopf- und Bodenplatte 6 und 7 jeweils wieder vollständig abtrocknen, bevor sie erneut benetzt werden. Die kapillarförmig aufgerauhte Struktur der inneren Oberfläche des Zylinders 1 bewirkt dabei zugleich eine gleichmäßige radiale Verteilung der zu verdampfenden Flüssigkeit. Die Rippen 4 dienen bei diesem Verdampfungsvorgang sowohl zur Beeinflussung der Strömung der Kühlflüssigkeit und damit zu einer intensiveren Wärmeabgabe als auch der Übertragung der Wärme aus der Kühlflüssigkeit auf den Zylinder 1 und damit an die die Verdampfung herbeiführenden Oberflächen. Zugleich bewirken sie eine mechanische Kopplung zwischen dem inneren und dem äußeren Zylinder, die auch bei höherem Innendruck im Ringspalt eine Deformation der Zylinder und damit eine Veränderung des Strömungsquerschnitts im Ringspalt 3 verhindert.

## Patentansprüche

1. Verdampfungswärmetauscher mit wenigsten einem aktiven Flüssigkeitskühlkreislauf zur Abführung von Wärme in Raumfahrzeugen, bei dem die Kühlflüssigkeit in thermischen Kontakt mit einem zu verdampfenden Medium gebracht wird und der aus einem vorzugsweise zylindrischen Behälter besteht, in dessen Inneres das zu verdampfende Medium eingespritzt wird und dessen Wandung zur Bildung eines Ringspaltes aus einer äußeren und einer inneren Schale besteht, wobei das Kühlmittel den Ringspalt durchströmt und wobei im Ringspalt Mittel zur Verbesserung der Wärmeübertragung in Form von Rippen vorgesehen sind, die mit den beiden Seiten verbunden sind, dadurch gekennzeichnet, daß die Rippen (4,24,34) an einer der Schalen (1,21,31) angeordnet sind und an ihrem der zweiten Schale (2,22,32) zugewandten Außenbereich Ausnehmungen (16,26,36) aufweisen, die mit an der zweiten Schale (2,22,32) angeordneten Ansätzen (17,27,37) zur Bildung einer bei Zugbeanspruchung in radialer Richtung kraftschlüssigen Verbindung korrespondieren.

2. Verdampfungswärmetauscher nach Anspruch 1, dadurch gekennzeichnet, daß die Ausnehmungen (16,36) schwalbenschwanzförmig ausgebildet sind.

3. Verdampfungswärmetauscher nach Anspruch 1, dadurch gekennzeichnet, daß die Ausnehmungen parallelogrammförmig ausgebildet sind.

4. Verdampfungswärmetauscher nach einem der Ansprüche 1 bis 3, dadurch gekennzeichnet, daß die Rippen (4,24,34) einstückig an die Schale (1,21,31) angeformt sind.

5. Verdampfungswärmetauscher nach einem der Ansprüche 1 bis 4, dadurch gekennzeichnet, daß die Ansätze (17,27,37) einstückig an die Schale (2,22,32) angeformt sind.

6. Verdampfungswärmetauscher nach einem der Ansprüche 1 bis 5, dadurch gekennzeichnet, daß die Rippen (4,24) in Umfangsrichtung verlaufen.

7. Verdampfungswärmetauscher nach einem der Ansprüche 1 bis 5, dadurch gekennzeichnet, daß die Rippen (34) in axialer Richtung verlaufen.

8. Verdampfungswärmetauscher nach einem der Ansprüche 1 bis 7, dadurch gekennzeichnet, daß die Rippen (4,24,34) unterbrochen ausgebildet sind.

## Claims

1. Evaporation heat exchanger with at least one active liquid coolant circuit for removing heat in spacecraft, in which the cooling liquid is brought into thermal contact with a medium to be evaporated and which consists of a preferably cylindrical casing, into the interior of which the medium to be evaporated is injected and the wall of which consists of an outer and an inner shell so as to form an annular gap, the coolant flowing through the annular gap and means in the form of fins for improving the heat transfer being provided in the annular gap, which fins are connected to both sides, characterised in that the fins (4, 24, 34) are disposed on one of the shells (1, 21, 31) and comprise recesses (16, 26, 36) in their outer area which faces the second shell (2, 22, 32), which recesses correspond to projections (17, 27, 37) disposed on the second shell (2, 22, 32) to form a connection which is non-positive under tensile stress in the radial direction.

2. Evaporation heat exchanger according to claim 1, characterised in that the recesses (16, 36) are dovetailed.

3. Evaporation heat exchanger according to claim 1, characterised in that the recesses are in the form of parallelograms.

4. Evaporation heat exchanger according to any one of claims 1 to 3, characterised in that the fins (4, 24, 34) are moulded onto the shell (1, 21, 31) in one piece.

5. Evaporation heat exchanger according to any one of claims 1 to 4, characterised in that the projections (17, 27, 37) are moulded onto the shell (2, 22, 32) in one piece.

6. Evaporation heat exchanger according to any one of claims 1 to 5, characterised in that the fins (4, 24) extend in the circumferential direction.

7. Evaporation heat exchanger according to any one of claims 1 to 5, characterised in that the fins (34) extend in the axial direction.

8. Evaporation heat exchanger according to any one of claims 1 to 7, characterised in that the fins (4, 24, 34) are discontinuous.

## Revendications

1. Echangeur de chaleur par vaporisation avec au moins un circuit actif de refroidissement de liquide pour évacuer de la chaleur dans des véhicules spatiaux, dans lequel le liquide de refroidissement est mis en contact thermique avec un agent à vaporiser et qui consiste en un réservoir de préférence cylindrique, à l'intérieur duquel l'agent à vaporiser est pulvérisé et dont la paroi consiste pour former une fente annulaire en une coquille extérieure et une coquille intérieure, l'agent de refroidissement s'écoulant à travers la fente annulaire et des moyens étant prévus dans la fente annulaire, pour améliorer la transmission de la chaleur, sous la forme de nervures, qui sont reliées aux deux côtés, échangeur de chaleur caractérisé en ce que les nervures (4, 24, 34) sont disposées sur l'une des coquilles (1, 21, 31) et présentent sur leur zone extérieure tournée vers la deuxième coquille (2, 22, 32) des évidements (16, 26, 36) qui correspondent à des appendices (17, 27, 37) disposés sur la deuxième coquille (2, 22, 32) pour former une liaison par interpénétration par la force dans le sens radial en cas de sollicitation de traction.

2. Echangeur de chaleur par vaporisation selon la revendication 1, caractérisé en ce que les évidements (16, 36) sont constitués sous forme de queue d'aronde.

3. Echangeur de chaleur par vaporisation selon la revendication 1, caractérisé en ce que les évidements sont constitués sous la forme de parallélogrammes.

4. Echangeur de chaleur par vaporisation selon l'une des revendications 1 à 3, caractérisé en ce que les nervures (4, 24, 34) sont formées de façon monobloc sur la coquille (1, 21, 31).

5. Echangeur de chaleur par vaporisation selon l'une des revendications 1 à 4, caractérisé en ce que les appendices (17, 27, 37) sont formés de façon monobloc sur la coquille (2, 22, 32).

6. Echangeur de chaleur par vaporisation selon l'une des revendications 1 à 5, caractérisé en ce que les nervures (4, 24) s'étendent dans le sens périphérique.

7. Echangeur de chaleur par vaporisation selon l'une des revendications 1 à 5, caractérisé en ce que les nervures (34) s'étendent dans le sens axial.

8. Echangeur de chaleur par vaporisation selon l'une des revendications 1 à 7, caractérisé en ce que les nervures (4, 24, 34) sont constituées avec des interruptions.
